# FASCICULE DE BREVET EUROPEEN

(11) **EP 0 682 199 B1**
(45) Date de publication et mention de la délivrance du brevet: **07.04.1999**
(21) Numéro de dépôt: 95401067.4
(22) Date de dépôt: 09.05.1995
(51) Int. Cl.: F16K 27/02, F16K 31/165, F16K 31/528

(54) **Robinet à papillon**
Klappe
Butterfly valve

(30) Priorité: 11.05.1994 FR 9405824
(43) Date de publication de la demande: 15.11.1995
(73) Titulaire: MAGNETI MARELLI FRANCE, F-92000 Nanterre (FR)
(72) Inventeur: Semence, Pierre, F-78400 Chatou (FR)
(74) Mandataire: Bérogin, Francis

(56) Documents cités:
- EP-A- 0 205 666
- WO-A-91/00453
- WO-A-95/00817
- BE-A- 680 012
- US-A- 2 883 144
- US-A- 3 602 478

## Description

L'invention se rapporte à un dispositif de dosage de fluide, du type comprenant un corps traversé par au moins un conduit dans lequel au moins un organe d'étranglement, sensiblement en forme de disque, est monté rotatif autour d'un axe géométrique sensiblement perpendiculaire à l'axe du conduit, et commandé en rotation par des moyens d'entraînement portés par le corps.

On connait déjà de nombreux dispositifs de dosage de ce type, tels que les corps de papillon ou corps de carburateur, qui sont montés sur des tubulures d'admission respectivement d'air ou d'air carburé de moteurs à combustion interne, respectivement à injection ou à carburateur, ainsi que des vannes de commande du recyclage des gaz d'échappement d'un moteur à combustion interne tel qu'un moteur diesel, pour lesquelles le corps du dispositif est monté sur une conduite d'admission d'air au moteur, en amont du débouché d'une conduite de recyclage des gaz d'échappement dans cette conduite d'admission d'air.

Dans ces dispositifs de dosage connus, l'organe d'étranglement ou obturateur en forme de disque, souvent appelé papillon, est fixé, à l'intérieur du conduit, sur un arbre monté transversalement et rotatif dans le conduit, par exemple à l'aide de vis maintenant le papillon dans une fente de l'arbre.

Pour éviter le blocage du papillon dans le conduit, ce montage nécessite un centrage délicat du papillon sur l'arbre et dans le conduit, ainsi que des paliers et des portées dans le corps et sur l'arbre pour un tourillonnement approprié de l'arbre sur le corps.

De plus, en particulier dans des doseurs pour vannes de recyclage des gaz d'échappement, un dispositif de rattrapage de jeu axial et/ou un dispositif de butée de rotation doivent coopérer avec l'arbre, par exemple à son extrémité qui est opposée à celle par laquelle ce dernier est commandé en rotation par les moyens d'entraînement, tels qu'un actionneur, éventuellement pneumatique, à membrane et piston à course rectiligne, implanté latéralement sur le corps, à l'extérieur du conduit, comme décrit dans US-A-3,602,478 et US-A-2,883,144.

Dans le cas d'un corps de papillon ou de carburateur, les moyens d'entraînement peuvent également comprendre un actionneur, commandé notamment en fonction de la position de la pédale d'accélérateur, mais, le plus souvent, ils comportent une came de commande de gaz, montée en rotation coaxiale autour d'une partie d'arbre externe au corps, et actionnée par un câble de manoeuvre relié à la pédale d'accélérateur.

Dans les différents exemples d'application précités, les moyens d'entraînement permettent de faire pivoter le papillon de l'une à l'autre de deux positions limites dans le corps, dont l'une est une position de pleine ouverture, et dont l'autre est une position de fermeture, qui peut être une position de fermeture non complète, de façon à assurer un débit minimum d'air déterminé.

Pour remédier aux inconvénients principaux des dispositifs doseurs de ce type, qui tiennent au centrage du papillon dans le conduit et à sa fixation sur l'arbre, il est connu par EP-A-0 205 666 que l'organe d'étranglement présente une partie conformée et un évidement coaxiaux autour de l'axe de rotation et dans l'une respectivement de deux parties opposées de l'organe d'étranglement, ladite partie conformée étant de révolution autour de l'axe de rotation et coopérant avec une partie conformée au moins partiellement complémentaire du corps et également de révolution autour de l'axe de rotation, les deux parties conformées coopérantes étant telles que l'une est au moins partiellement en saillie sur l'élément qui la présente et au moins partiellement logée dans l'autre agencée en évidement dans l'élément qui la présente, de sorte que l'organe d'étranglement pivote sur la partie conformée complémentaire du corps, l'évidement de l'organe d'étranglement étant un évidement sensiblement cylindrique de section droite circulaire, qui s'ouvre latéralement dans la périphérie de ce dernier et par lequel l'organe d'étranglement est monté coaxialement autour d'une tige de guidage en rotation coaxiale de l'organe d'étranglement, la tige étant partiellement logée dans l'évidement et portée par le corps, et en saillie à l'intérieur du conduit.

L'organe d'étranglement de ce dispositif n'a donc pas à être solidarisé à un arbre transversal alors qu'il est centré dans le conduit. Il suffit d'engager la partie conformée en saillie dans la partie conformée agencée en évidement pour assurer la rotation sur un côté de l'organe d'étranglement. Pour faciliter le montage et la rotation, EP-A-0 205 666 propose que celle des parties conformées coopérantes qui est agencée en évidement soit au moins en partie délimitée par une portion de surface sphérique et loge une partie en portion de sphère de l'autre partie conformée coopérante agencée en pivot en saillie sur l'élément qui la présente.

Dans un mode de réalisation de EP-A-0 205 666 le pivot est hémisphérique, d'une seule pièce avec l'organe d'étranglement, et en saillie sur sa périphérie coaxialement vers l'extérieur du conduit, et monté à pivotement dans la partie conformée agencée en évidement de forme sensiblement hémisphérique ménagé dans la paroi du conduit et qui s'ouvre radialement vers l'intérieur de ce dernier.

BE-A-680 012 décrit un dispositif sensiblement analogue, dans lequel le pivot hémisphérique est fixé au corps et fait saillie sur la paroi du conduit, radialement vers l'intérieur du conduit, et la partie conformée agencée en évidement constitue un second évidement de forme sensiblement hémisphérique qui s'ouvre latéralement dans la périphérie de l'organe d'étranglement. Mais dans BE-A-680 012, le premier évidement est également sensiblement hémisphérique, et loge des moyens de guidage et d'entraînement en rotation de l'organe d'étranglement qui comprennent un autre pivot hémisphérique (et non une tige) en saillie radiale autour d'un axe transversal parallèle mais décalé par rapport à celui du premier pivot hémisphérique considéré, de sorte que l'organe d'étranglement est pivoté dans le conduit par un montage complexe à la cardan, qui impose de ménager les évidements hémisphériques dans des parties en saillie sur les faces planes opposées de l'organe d'étranglement. La réalisation de ce dernier et de ses moyens de guidage et d'entraînement en rotation est donc complexe.

Dans EP-A-0 205 666, le dispositif est tel que sa tige, traversant une paroi du corps, présente une partie de tige externe au corps et coopérant avec de nombreux moyens complémentaires et empilés d'entraînement en rotation de la tige autour de l'axe de rotation, ainsi qu'une partie de tige interne au premier évidement et présentant des moyens coopérant avec l'organe d'étranglement pour l'entraîner en rotation lorsque la tige est elle-même entraînée en rotation, de sorte que les moyens d'entraînement en rotation sont complexes et coûteux.

Par contre, US-A-3,602,478 et US-A-2,883,144 décrivent des dispositifs présentant les inconvénients liés au centrage du papillon dans le conduit et à sa fixation sur un arbre transversal mais les moyens de guidage et d'entraînement en rotation sont simples : l'arbre est prolongé, à l'extérieur du corps, par une tige dont l'extrémité présente des nervures ou des rainures hélicoïdales en prise avec respectivement des rainures hélicoïdales ou des saillies à l'intérieur d'un manchon solidaire en translation axiale d'un piston lié à une membrane délimitant deux chambres isolées dans un boîtier d'un actionneur rectiligne à commande par fluide, muni d'organes de rappel élastique de la membrane et du piston, et dont une chambre est sélectivement reliée à des moyens de mise en pression ou dépression de fluide. Le mécanisme de transformation du mouvement axial du manchon avec le piston en rotation de la tige et de l'arbre, pour pivoter le papillon, occupe un volume important en saillie latérale sur le corps, ce qui conduit à surdimensionner ce dernier et les moyens de fixation réciproque, et donc à un encombrement, un poids et un coût excessifs du dispositif.

Le but de l'invention est de proposer un dispositif du type connu par EP-A-0 205 666, mais convenant mieux aux diverses exigences de la pratique pour ce qui concerne la simplicité des moyens d'entraînement en rotation, analogues à ceux connus par US-A-3,602,478 et US-A-2,883,144, tout en permettant la réalisation d'un ensemble plus compact, plus léger et plus économique, bien que d'une grande simplicité et fiabilité.

Un autre but de l'invention est de proposer un tel dispositif permettant non seulement un montage facile du papillon dans le conduit mais facilitant également son entraînement en rotation selon une loi non linéaire déterminée.

A cet effet, le dispositif du type précité, se caractérise, selon l'invention, en ce que la tige coulisse axialement sur le corps et dans l'évidement sensiblement cylindrique, ce dernier et la tige présentant respectivement des moyens complémentaires d'un mécanisme de transformation du mouvement de translation de la tige selon l'axe de rotation en mouvement de rotation de l'organe d'étranglement autour dudit axe dans le conduit.

L'idée à la base de l'invention consiste donc à disposer le mécanisme de transformation de mouvement de translation en rotation dans l'évidement cylindrique de l'organe d'étranglement, autour de la portion de tige coulissant axialement dans cet évidement.

Cette réalisation de dispositif doseur peut être appliquée non seulement à une vanne de recyclage des gaz d'échappement ou à une installation de climatisation, mais également comme corps de papillon ou de carburateur si la commande de rotation du papillon est assurée par un actionneur à course rectiligne.

L'avantage, dans ce cas, est que le mécanisme de transformation du mouvement peut assurer une rotation de l'organe d'étranglement selon une loi non linéaire en fonction de la translation de la tige.

De manière simple, ceci est obtenu à l'aide d'un mécanisme connu de transformation du mouvement comprenant au moins un ergot, et de préférence deux, sensiblement radial par rapport à l'axe de rotation et fixé sur la tige ou dans le premier évidement, et engagé et guidé dans une rainure hélicoïdale correspondante ménagée respectivement dans le premier évidement ou sur la tige, de sorte que toute translation axiale de la tige dans le premier évidement entraîne une rotation de l'organe d'étranglement. La loi donnant la rotation du papillon en fonction de la translation de la tige est alors déterminée par la loi de variation du pas de la rainure hélicoïdale.

De plus, le dispositif comprend avantageusement des moyens, de préférence réglables, de limitation de la course axiale de la tige dans le premier évidement, pour limiter les débattements en rotation de l'organe d'étranglement entre deux positions limites. De plus, ces moyens de limitation assurent qu'une longueur suffisante de tige reste engagée dans le premier évidement pour garantir un bon guidage en rotation de l'organe d'étranglement, du côté opposé au pivot en portion de sphère.

Comme connu, pour une manoeuvre simple et efficace de la tige, une partie externe au corps de cette dernière est solidaire en translation d'un organe mobile d'un actionneur à course rectiligne axiale, implanté latéralement sur le corps.

Dans une forme de réalisation connue, compacte et économique, l'actionneur est à commande pneumatique et son organe mobile comprend un piston mobile avec une membrane étanche dans un boîtier d'actionneur dans lequel le piston et la membrane délimitent deux chambres isolées l'une de l'autre, dont l'une loge des moyens élastiques de rappel sollicitant le piston, qui est guidé en translation selon l'axe de rotation par coulissement de la tige dans un support solidarisant le boîtier au corps, l'une des chambres étant à la pression atmosphérique et l'autre mise en communication sélective avec l'atmosphère ou une source de gaz sous pression ou dépression, pour translater l'organe mobile et la tige contre les moyens élastiques de rappel et faire pivoter l'organe d'étranglement.

Dans ce cas, il est avantageux que le corps, le support et au moins une partie du boîtier d'actionneur soient d'une seule pièce en matière de synthèse moulable, par exemple en thermoplastique, et/ou que l'organe d'étranglement soit également d'une seule pièce en matière de synthèse moulable, ainsi que la tige d'une seule pièce avec au moins une partie du piston.

D'autres avantages et caractéristiques de l'invention découleront de la description donnée ci-dessous, à titre non limitatif, d'un exemple de réalisation décrit en référence aux dessins annexés sur lesquels :
- la figure 1 représente une vue en perspective du doseur avec une ouverture du corps montrant l'organe d'étranglement, en partie en coupe, monté sur un pivot hémisphérique,
- la figure 2 représente le doseur de la figure 1 en coupe par un plan médian passant par l'axe du conduit du corps et par l'axe de rotation de l'organe d'étranglement, et
- la figure 3 est une vue en perspective d'une moitié de l'organe d'étranglement coupé par un plan diamétral passant par le milieu de son épaisseur.

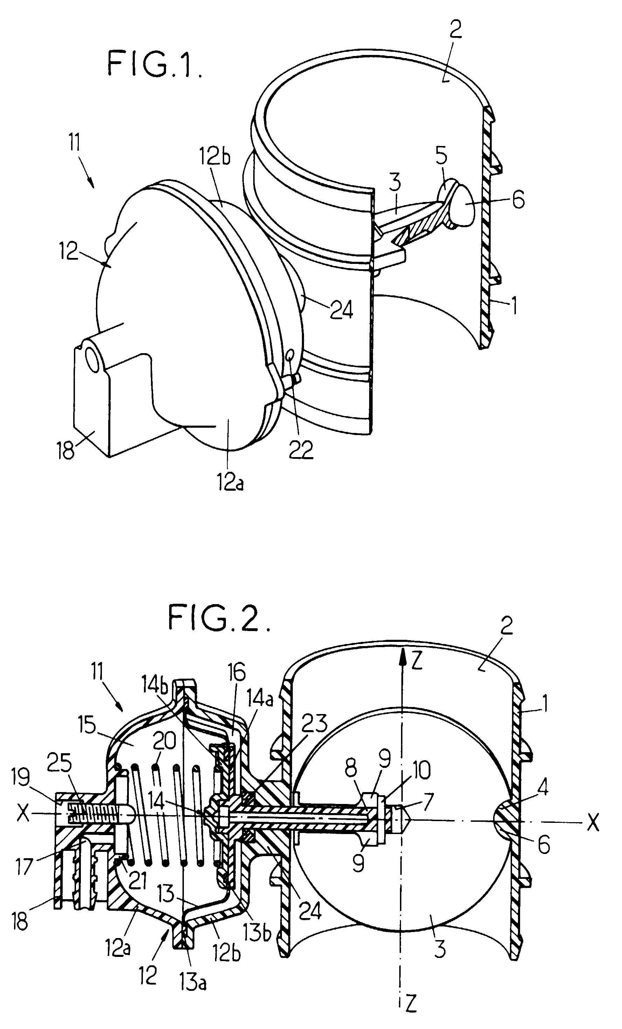

Le dispositif de dosage de fluide des figures 1 à 3 est, à titre d'exemple, un doseur de recyclage des gaz d'échappement, qui comprend un corps 1 traversé par un conduit 2 cylindrique de section circulaire, dans lequel un organe d'étranglement 3, ou obturateur en forme sensiblement de disque circulaire, et appelé papillon dans la suite de la description, est monté pivotant autour d'un axe géométrique de rotation X-X diamétral au conduit 2 et perpendiculaire à l'axe Z-Z de ce dernier.

Dans l'une de deux parties diamétralement opposées du papillon 3, le papillon présente une partie conformée en évidement 4, de révolution autour de l'axe de rotation X-X, et délimitée par une calotte hémisphérique 5 qui s'ouvre radialement dans la périphérie du papillon 3. Par cette calotte 5, le papillon 3 est monté tourillonnant sur un pivot hémisphérique 6, coaxial, de révolution autour de l'axe X-X, d'une seule pièce avec le corps 1, et en saillie vers l'intérieur du conduit 2, sur la face interne du corps 1, le rayon du pivot hémisphérique 6 étant de peu inférieur au rayon de l'évidement hémisphérique 4 pour que le pivot 6 puisse se loger pratiquement sans jeu dans ce logement 4.

Dans sa partie diamétralement opposée à l'évidement 4, le papillon 3 présente un évidement radial coaxial cylindrique 7, de section droite circulaire, s'étendant pratiquement jusqu'au centre du papillon 3, et s'ouvrant latéralement dans la périphérie de ce dernier.

Pour faciliter la réalisation des évidements 4 et 7, le papillon 3 peut présenter une partie diamétrale surépaissie dans laquelle ces évidements coaxiaux sont pratiqués.

Par son évidement cylindrique de section circulaire 7, le papillon 3 est monté tourillonnant autour de l'axe X-X sur une tige 8 coaxiale, et en saillie à l'intérieur de l'évidement 7 par une partie de tige constituant simultanément des moyens de guidage et d'entraînement en rotation coaxiale du papillon 3.

La tige 8 est guidée en translation selon l'axe de rotation X-X et dans le logement 7 par un actionneur à course rectiligne et coaxiale, porté par le corps 1 à l'extérieur du conduit 2, et plus précisément décrit ci-dessous.

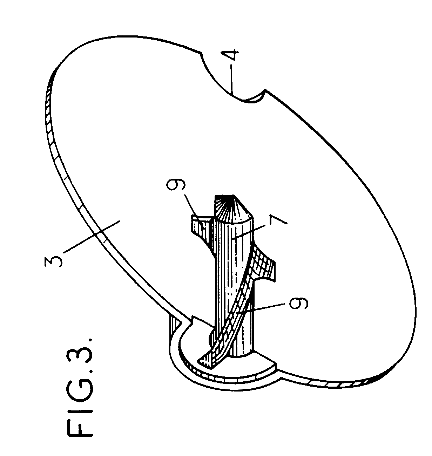

De plus, la tige 8 et le papillon 3 sont en prise l'un avec l'autre par l'intermédiaire d'un mécanisme de transformation du mouvement de translation de la tige 8 selon l'axe X-X en mouvement de rotation du papillon 3 autour de cet axe. Ce mécanisme comprend au moins une et de préférence deux rainures hélicoïdales identiques, telles que schématisées en 9, ménagées dans le papillon 3 et plus précisément dans la face latérale de l'évidement 7 (voir figure 3), et décalées l'une de l'autre de 180° en direction circonférentielle, et au moins un et de préférence deux ergots radiaux 10, formés par les extrémités d'une goupille solidaire de l'extrémité de la tige 8 et perpendiculaire à son axe, et chacun engagé et guidé dans une rainure hélicoïdale 9.

Ainsi, toute translation axiale de la tige 8 avec ses ergots 10 sans rotation dans le logement 7 entraîne, par déplacement des ergots 10 dans les rainures 9, la rotation correspondante des rainures 9 et du papillon 3 autour de X-X.

L'actionneur, désigné dans son ensemble par la référence 11, comprend un boîtier 12 fermé, en deux parties 12a et 12b, chacune en forme de cuvette à concavité tournée vers l'autre, assemblées par leur bord en pinçant entre elles, avec étanchéité, le bourrelet 13a de la périphérie radiale externe d'une membrane annulaire 13, étanche souple et élastiquement déformable, dont un bourrelet 13b à la périphérie radiale interne est pincé entre deux plaques 14a et 14b accolées, formant un piston 14 solidaire en mouvement de la membrane 13, à l'intérieur du boîtier 12.

Dans ce dernier, la membrane 13 et le piston 14 délimitent deux chambres 15 et 16, isolées l'une de l'autre, et dont l'une, 15, est reliée par le canal coudé 17, traversant un embout 18 porté par le fond de la partie de boîtier 12a, à une électrovanne de commande (non représentée) permettant la mise en communication sélective de la chambre 15 soit avec l'atmosphère, soit avec une source de dépression, telle qu'une pompe à vide (également non représentée).

La chambre 15 renferme également un ressort de compression hélicoïdal 20, prenant appui d'un côté autour d'une nervure de centrage annulaire 21, en saillie sur le fond de la partie de boîtier 12a vers l'intérieur de la chambre 15, et, de l'autre côté, contre la plaque 14b du piston 14. Le ressort 20 tend à repousser le piston 14 et la membrane 13 vers le corps 1, dans une position de volume minimum de la chambre 16, mise à l'atmosphère par l'orifice 22 (voir figure 1) percé dans la partie de boîtier 12b.

Par la partie centrale de sa plaque 14a, du côté opposé au ressort 20, le piston 14 est solidaire d'une partie de tige 8 qui s'étend hors du logement 7 et du conduit 2 et qui est guidée à coulissement coaxial selon X-X à l'intérieur d'un support 24 cylindrique, reliant la partie de boîtier 12b au corps 1, en étant de préférence d'une seule pièce en matière de synthèse moulable, par exemple en termoplastique avec ces éléments. L'étanchéité entre la chambre 16 et le conduit 2 est assurée autour de la tige 8 par un joint 23 logé dans une gorge du support 24.

Ce dispositif fonctionne de la manière suivante : la figure 2 représente le dispositif dans l'une des deux positions extrêmes, qui est une position de repos pour le doseur de recyclage des gaz d'échappement, dans laquelle le papillon 3 est en position d'ouverture maximum du conduit 2, et le piston 14 et la membrane 13 sont repoussés au maximum vers le corps 1 par le ressort 20, les chambres 15 et 16 étant à la pression atmosphérique, la tige 8 du piston 14 étant engagée au maximum dans le logement 7.

Si l'électrovanne de commande met la chambre 15 en communication avec la pompe à vide, la surface efficace de la membrane 13 et du piston 14 ainsi que la caractéristique du ressort 20 sont telles que la pression différentielle à laquelle sont soumis la membrane 13 et le piston 14 est suffisante pour que ces éléments soient déplacés en comprimant le ressort 20 et translatés axialement vers le fond de la partie de boîtier 12a, grâce au guidage axial de la tige 8 dans le support 24. Ce faisant, les ergots 10 translatés font tourner les rainures 10 ce qui entraîne la rotation du papillon 3 dans le sens de la fermeture du conduit 2, jusqu'à la position de fermeture maximum (non complète) représentée sur la figure 1, qui est l'autre position extrême.

Lorsque l'électrovanne coupe la communication entre la source de dépression et la chambre 15 par le canal 17 de l'embout 18, et met cette chambre 15 à l'atmosphère, le ressort 20 se détend et ramène le piston 14 et la membrane 13 dans la position de la figure 2, de sorte que le papillon 3 est tourné en sens inverse.

Pour un bon fonctionnement et une facilité de réalisation, les différents éléments constitutifs de l'actionneur 11, à commande pneumatique par dépression, sont coaxiaux à la tige 8 et au support 24, autour de l'axe de rotation X-X. De plus, la plaque de piston 14a peut être d'une seule pièce en matière de synthèse moulable avec la tige 8, de même que la partie de boîtier 12a avec l'embout 18, et le papillon 3 peut constituer une autre pièce moulée en matière de synthèse.

Pour limiter la course axiale de la tige 8 dans le logement 7, et donc limiter les rotations du papillon 3 entre ses deux positions extrêmes précitées (figures 1 et 2), le doseur comprend une butée réglable 25, constituée par une vis plus ou moins vissée dans un alésage axial taraudé 19 traversant le fond de la partie de boîtier 12a, et dont l'extrémité en saillie dans cette partie 12a limite le déplacement de la tige 8 par contact avec la partie centrale du piston 14. Dans l'autre sens, le déplacement de la tige 8 est limité par la venue de son extrémité et des ergots 10 qu'elle porte, du côté opposé au piston 14, en contact avec l'extrémité des rainures 9 vers le fond du logement 7.

La variation donnée au pas des rainures hélicoïdales 9 dans le papillon 3 permet de donner au papillon 3 une loi de rotation choisie, éventuellement non linéaire en fonction du déplacement axial de la tige 8. Par exemple, si le pas est grand au début et à la fin de la course de la tige 8, et petit dans la partie centrale de cette course, le papillon 3 pivotera lentement au début et à la fin d'une rotation entre ses deux positions extrêmes, en pivotant plus rapidement au milieu de son débattement angulaire.

Si, dans une autre application du doseur, par exemple comme corps de papillon ou de carburateur, la position de repos du papillon 3 est celle de la figure 1 (position fermée), on peut alors inverser les fonctions des chambres 15 et 16 de l'actionneur 11, et mettre la chambre 15 en permanence à l'atmosphère, et la chambre 16 sélectivement en communication avec l'atmosphère et la source de dépression, le ressort 20 étant alors logé dans la chambre 16.

On peut aussi mettre le ressort 20 dans la chambre 16, mise en permanence à l'atmosphère, et repousser le piston 14 et la tige 8 dans la position de la figure 2 en admettant un fluide sous pression (air comprimé) dans la chambre 15.

D'une manière générale, le doseur décrit ci-dessus dans son application au dosage des gaz d'échappement recyclés, peut être utilisé dans d'autres applications, à chaque fois qu'il est utile de transformer un mouvement d'actionnement linéaire en un mouvement de rotation, éventuellement selon une loi non linéaire, pour commander le débit d'une vanne de dosage de fluide, et en particulier de gaz, par exemple pour le dosage de l'air dans une installation de climatisation de véhicules.

## Revendications

1. Dispositif de dosage de fluide, comprenant un corps (1) traversé par au moins un conduit (2) dans lequel au moins un organe d'étranglement (3), sensiblement en forme de disque, est monté rotatif autour d'un axe géométrique (X-X) sensiblement perpendiculaire à l'axe (Z-Z) du conduit (2), et commandé en rotation par des moyens d'entraînement (8, 14, 11) portés par le corps (1), l'organe d'étranglement (3) présentant une partie conformée (4) et un évidement (7) coaxiaux autour de l'axe de rotation (X-X) et dans l'une respectivement de deux parties opposées de l'organe d'étranglement (3), ladite partie conformée (4) étant de révolution autour de l'axe de rotation (X-X) et coopérant avec une partie conformée (6) au moins partiellement complémentaire du corps (1) et également de révolution autour de l'axe de rotation (X-X), les deux parties conformées coopérantes (4, 6) étant telles que l'une (6) est au moins partiellement en saillie sur l'élément (1) qui la présente et au moins partiellement logée dans l'autre (4) agencée en évidement dans l'élément (3) qui la présente, de sorte que l'organe d'étranglement (3) pivote sur la partie conformée complémentaire (6) du corps (1), l'évidement (7) de l'organe d'étranglement (3) étant un évidement sensiblement cylindrique de section droite circulaire qui s'ouvre latéralement dans la périphérie de ce dernier et par lequel l'organe d'étranglement (3) est monté coaxialement autour d'une tige (8) de guidage en rotation coaxiale de l'organe d'étranglement (3), ladite tige (8) étant partiellement logée dans l'évidement (7) et portée par le corps (1) et en saillie à l'intérieur du conduit (2), caractérisé en ce que la tige (8) coulisse axialement sur le corps (1) et dans l'évidement (7), ce dernier et la tige (8) présentant respectivement des moyens complémentaires (9, 10) d'un mécanisme de transformation du mouvement de translation de la tige (8) selon l'axe de rotation (X-X) en mouvement de rotation de l'organe d'étranglement (3) autour dudit axe (X-X) dans le conduit (2).

2. Dispositif de dosage selon la revendication 1, caractérisé en ce que celle (4) des parties conformées coopérantes (4, 6) qui est agencée en évidement est au moins en partie délimitée par une portion de surface sphérique et loge une partie en portion de sphère de l'autre partie conformée coopérante (6) agencée en pivot en saillie sur l'élément (1) qui la présente.

3. Dispositif de dosage selon la revendication 2, caractérisé en ce que le pivot (6) est hémisphérique, d'une seule pièce avec le corps (1) et en saillie sur la paroi du conduit (2) coaxialement vers l'intérieur du conduit (2), et la partie conformée (4) agencée en évidement constitue un second évidement de forme sensiblement hémisphérique qui s'ouvre latéralement dans la périphérie de l'organe d'étranglement (3).

4. Dispositif de dosage selon la revendication 2, caractérisé en ce que le pivot est hémisphérique d'une seule pièce avec l'organe d'étranglement (3) et en saillie sur sa périphérie coaxialement vers l'extérieur du conduit (2), et monté à pivotement dans la partie conformée agencée en évidement de forme sensiblement hémisphérique ménagé dans la paroi du conduit (2) et qui s'ouvre radialement vers l'intérieur de ce dernier.

5. Dispositif de dosage selon l'une des revendications 1 à 4, caractérisé en ce que ledit mécanisme (9, 10) de transformation de mouvement assure une rotation de l'organe d'étranglement (3) selon une loi non linéaire en fonction de la translation de la tige (8).

6. Dispositif de dosage selon l'une des revendications 1 à 5, caractérisé en ce que le mécanisme de transformation de mouvement comprend au moins un ergot (10) sensiblement radial par rapport à l'axe de rotation (X-X) et fixé sur la tige (8) ou dans l'évidement (7), et engagé et guidé dans une rainure hélicoïdale (9) ménagée respectivement dans l'évidement (7) ou sur la tige (8), de sorte que toute translation axiale de la tige (8) dans l'évidement (7) entraîne une rotation de l'organe d'étranglement (3).

7. Dispositif de dosage selon l'une quelconque des revendications 1 à 6, caractérisé en ce qu'il comprend des moyens (25), de préférence réglables, de limitation de la course axiale de la tige (8) dans l'évidement (7), pour limiter les débattements en rotation de l'organe d'étranglement (3) entre deux positions limites.

8. Dispositif de dosage selon l'une quelconque des revendications 1 à 7, caractérisé en ce que la tige (8) présente une partie externe au corps (1) et solidaire en translation d'un organe mobile (14) d'un actionneur (11) à course rectiligne axiale, implanté latéralement sur le corps (1).

9. Dispositif de dosage selon la revendication 8, caractérisé en ce que l'actionneur (11) est à commande pneumatique et son organe mobile comprend un piston (14) mobile avec une membrane (13) étanche dans un boîtier (12) d'actionneur dans lequel le piston (14) et la membrane (13) délimitent deux chambres (15, 16) isolées l'une de l'autre, dont l'une (15) loge des moyens élastiques de rappel (20) sollicitant le piston (14), qui est guidé en translation selon l'axe de rotation (X-X) par coulissement de la tige (8) dans un support (24) solidarisant le boîtier (12) au corps (1), l'une (16) des chambres étant à la pression atmosphérique et l'autre (15) mise en communication (17, 18) sélective avec l'atmosphère ou une source de gaz sous pression ou dépression, pour translater l'organe mobile (14) et la tige (8) contre les moyens élastiques de rappel (20) et faire pivoter l'organe d'étranglement (3).

10. Dispositif de dosage selon la revendication 9, caractérisé en ce que le corps (1), le support (24) et au moins une partie (12b) du boîtier (12) d'actionneur sont d'une seule pièce en matière de synthèse moulable et/ou l'organe d'étranglement (3) est en ce que d'une seule pièce en matière de synthèse moulable, ainsi que la tige (8) d'une seule pièce avec au moins une partie (14a) du piston (14).

## Claims

1. A device for quantitatively dispensing fluid, comprising a body (1) traversed by at least one duct (2) in which at least one throttling element (3) substantially in the form of a disc, is mounted to rotate about a geometrical axis (X-X) substantially perpendicular to the axis (Z-Z) of the duct (2) and controlled in a rotary sense by drive means (8,14,11) carried by the body (1), the throttling element (3) having a shaped part (4) and a recess (7) which are coaxial about the axis of rotation (X-X) and in one respectively of two opposite parts of the throttling member (3), the said shaped part (4) being a part of revolution about the axis of rotation (X-X), and co-operating with an at least partially matchingly shaped part (6) of the body (1) which is also a part of revolution about the rotation axis (X-X), the two co-operating shaped parts (4,6) being such that one (6) is at least partially projecting in respect of the element (1) which comprises it and at least partially housed in the other (4) which is arranged as a recess in the member (3) which comprises is so that the throttling member (3) pivots on the matchingly shaped part (6) of the body (1), the recess (7) in the throttling member (3) being a substantially cylindrical recess of circular cross-section which opens laterally into the periphery of this latter and through which the throttling member (3) is mounted coaxially about a guide rod (8) adapted to rotate coaxially in respect of the throttling member (3), the said rod (8) being partially housed in the recess (7) and carried by the body (1) and so that it projects inside the duct (2), characterised in that the rod (8) slides axially on the body (1) and in the recess (7), this latter and the rod (8) respectively comprising matching means (9,10) of a mechanism for converting the translatory movement of the rod (8) in accordance with the axis of rotation (X-X) into a rotary movement of the throttling member (3) about the said axis (X-X) in the duct (2).

2. A device for quantitative dispensing in accordance with claim 1, characterised in that the one (4) of the co-operatingly shaped part (4,6) which is arranged as a recess is at least partially bounded by a portion of spherical surface and accommodates a part which is a portion of a sphere of the other co-operatingly shaped part (6) arranged as a pivot projecting on the element (1) which carries it.

3. A device for quantitative dispensing in accordance with claim 2, characterised in that the pivot (6) is hemispherical, in one single piece with the body (1) and projecting in respect of the wall of the duct (2) coaxially towards the interior of the duct (2) and in that the shaped part (4) arranged in a recess constitutes a second recess of substantially hemispherical form which opens laterally into the periphery of the throttling member (3).

4. A device for quantitative dispensing in accordance with claim 2, characterised in that the pivot is hemispherical and in one single piece with the throttling member (3) and projecting on its periphery coaxially towards the exterior of the duct (2), and mounted to pivot in the shaped part arranged in a substantially hemispherical recess provided in the wall of the duct (2) and which opens radially towards the interior of this latter.

5. A device for quantitative dispensing in accordance with one of claims 1 to 4, characterised in that the said mechanism (9, 10) for transforming movement provides for a rotation of the throttling member (3) according to a non-linear law and as a function of the translatory movement of the rod (8).

6. A device for quantitative dispensing in accordance with one of claims 1 to 5, characterised in that the movement converting mechanism comprises at least one spigot (10) which is substantially radial in respect of the axis of rotation (X-X) and fixed on the rod (8) or in the recess (7) and engaged and guided in a helical groove (9) provided respectively in the recess (7) or on the rod (9) so that any axial translation of the rod (8) in the recess (7) results in a rotation of the throttling member (3).

7. A device for quantitative dispensing in accordance with any one of claims 1 to 6, characterised in that it comprises means (25), preferably adjustable, for limiting the axial travel of the rod (8) in the recess (7) in order to limit the rotary movements of the throttling member (3) between two extreme positions.

8. A device for quantitative dispensing in accordance with any one of claims 1 to 7, characterised in that the rod (8) has a part outside the body (1) and which is rigid in translation with a movable member (14) of an actuator (11) which follows a rectilinear axial stroke and which is implanted laterally on the body (1).

9. A device for quantitative dispensing according to claim 8, characterised in that the actuator (11) has pneumatic control and in that its movable member comprises a piston (14) adapted for movement with a fluid-tight diaphragm (13) in an actuating casing (12) in which the piston (14) and the diaphragm (13) define two chambers (15, 16) insulated in respect of each other, one of which (15) accommodates flexible restoring means (20) biasing the piston (14) which is guided in translation according to the axis of rotation (X-X) by sliding of the rod (8) in a support (24) attaching the casing (12) to the body (1), one (16) of the chambers being at atmospheric pressure while the other (15) is in selective communication (17, 18) with the atmosphere or a source of gas under pressure or negative pressure in order to move the movable member (14) and the rod (8) against the elastic restoring means (20) causing pivoting of the throttling member (3).

10. A device for quantitative dispensing in accordance with claim 9, characterised in that the body (1), the support (24) and at least one part (12b) of the casing (12) of the actuator are in one piece and of a mouldable synthetic material and/or in that the throttling member (3) is in one piece and of a mouldable synthetic material in the same way as the rod (8) is in one piece with at least one part (14a) of the piston (14).

## Patentansprüche

1. Vorrichtung zum Dosieren von Fluiden, mit einem Körper (1), durch den hindurch mindestens eine Rohrleitung (2) verläuft, in der mindestens ein im wesentlichen scheibenförmiges Drosselelement (3) um eine zu der Achse (Z-Z) der Rohrleitung (2) im wesentlichen senkrechte geometrische Achse (X-X) drehbar gelagert ist und von Antriebseinrichtungen (8, 14, 11) drehend betätigt wird, die von dem Körper (1) getragen sind, wobei das Drosselelement (3) einen formangepaßten Abschnitt (4) und eine Aussparung (7) aufweist, die koaxial um die Drehachse (X-X) und jeweils in einem von zwei einander gegenüberliegenden Abschnitten des Drosselelementes (3) angeordnet sind; der formangepaßte Abschnitt (4) um die Drehachse (X-X) umlaufsymmetrisch ist und mit einem formangepaBten Abschnitt (6) des Körpers (1) zusammenwirkt, der zumindest teilweise komplementär und ebenfalls um die Drehachse (X-X) umlaufsymmetrisch ist ; die beiden zusammenwirkenden formangepaßten Abschnitte (4, 6) derart ausgelegt sind, daß der eine (6) zumindest teilweise von dem Element (1) vorspringt, an dem er sich befindet, und zumindest teilweise in dem anderen (4) aufgenommen ist, der als Aussparung in dem Element (3) ausgebildet ist, an dem er sich befindet, so daß das Drosselelement (3) auf dem formangepaßten komplementären Abschnitt (6) des Körpers (1) verschwenkbar ist; die Aussparung (7) des Drosselelements (3) eine Aussparung mit im wesentlichen geradzylindrigem Querschnitt ist, die sich seitlich im Umfang des Drosselelements öffnet und mittels der das Drosselelement (3) koaxial um eine Stange (8) zum Führen des Drosselelements (3) in koaxialer Drehung gelagert ist; die Stange (8) teilweise in der Aussparung (7) aufgenommen und durch den Körper (1) getragen ist und ins Innere der Rohrleitung (2) vorsteht, **dadurch gekennzeichnet, daß** die Stange (8) auf dem Körper (1) und in der Aussparung (7) axial verschiebbar ist, wobei die Aussparung (7) und die Stange (8) jeweils komplementäre Einrichtungen (9, 10) eines Mechanismus zum Umwandeln der Verschiebungsbewegung der Stange (8) entlang der Drehachse (X-X) in eine Drehbewegung des Drosselelements (3) um die Achse (X-X) in der Rohrleitung (2) aufweisen.

2. Dosierungsvorrichtung nach Anspruch 1, dadurch gekennzeichnet, daß derjenige (4) der formangepaßten zusammenwirkenden Abschnitte (4, 6), der als Aussparung ausgebildet ist, zumindest teilweise durch eine Teilkugelfläche begrenzt ist und einen teilkugelförmigen Abschnitt des anderen zusammenwirkenden formangepaßten Abschnitts (6) aufnimmt, der als ein Drehzapfen ausgebildet ist und von dem Element (1) vorspringt, an dem er sich befindet.

3. Dosierungsvorrichtung nach Anspruch 2, dadurch gekennzeichnet, daß der Drehzapfen (6) halbkugelförmig und einstückig mit dem Körper (1) ausgebildet ist und koaxial auf der Wandung der Rohrleitung (2) zum Inneren der Rohrleitung (2) hin vorspringt, und der als Aussparung ausgebildete formangepaßte Abschnitt (4) eine zweite, im wesentlichen halbkugelförmige Aussparung darstellt, die sich seitlich im Umfang des Drosselelements (3) öffnet.

4. Dosierungsvorrichtung nach Anspruch 2, dadurch gekennzeichnet, daß der Drehzapfen halbkugelförmig und einstückig mit dem Drosselelement (3) ausgebildet ist und auf dessen Umfang koaxial zum Äußeren der Rohrleitung (2) hin vorspringt, und in dem im wesentlichen als halbkugelförmige Aussparung ausgebildeten formangepaßten Abschnitt verschwenkbar gelagert ist, der in der Wandung der Rohrleitung (2) vorgesehen ist und sich in Radialrichtung zum Inneren der Rohrleitung hin öffnet.

5. Dosierungsvorrichtung nach einem der Ansprüche 1 bis 4, dadurch gekennzeichnet, daß der Bewegungsumwandlungs-Mechanismus (9, 10) ein Drehen des Drosselelements (3) gemäß eines nicht-linearen Verlaufs in Abhängigkeit von der Verschiebung der Stange (8) gewährleistet.

6. Dosierungsvorrichtung nach einem der Ansprüche 1 bis 5, dadurch gekennzeichnet, daß der Bewegungsumwandlungs-Mechanismus mindestens einen Ansatz (10) aufweist, der im wesentlichen radial bezüglich der Drehachse (X-x) angeordnet und auf der Stange (8) bzw. in der Aussparung (7) befestigt ist sowie mit einer in der Aussparung (7) bzw. an der Stange (8) vorgesehenen wendelförmigen Nut (9) in Eingriff steht und darin geführt ist, so daß jegliche Axialverschiebung der Stange (8) in der Aussparung (7) ein Drehen des Drosselelements (3) hervorruft.

7. Dosierungsvorrichtung nach einem der Ansprüche 1 bis 6, dadurch gekennzeichnet, daß sie bevorzugt regelbare Einrichtungen (25) zum Begrenzen der axialen Auslenkung der Stange (8) in der Aussparung (7) aufweist, um die Drehbewegungen des Drosselelements (3) zwischen zwei Endpositionen zu begrenzen.

8. Dosierungsvorrichtung nach einem der Ansprüche 1 bis 7, dadurch gekennzeichnet, daß die Stange (8) einen außerhalb des Körpers (1) befindlichen Teil aufweist, der als Einheit mit dem geradlinig und axial verschiebbaren, seitlich an dem Körper (1) eingesetzten beweglichen Organ (14) eines Betätigungselementes (11) verschiebbar ist.

9. Dosierungsvorrichtung nach Anspruch 8, dadurch gekennzeichnet, daß das Betätigungselement (11) pneumatisch betätigbar ist, und sein bewegliches Organ einen beweglichen Kolben (14) mit einer dichten Membran (13) in einem Betätigungselement-Gehäuse (12) aufweist, in dem der Kolben (14) und die Membran (13) zwei voneinander isolierte Kammern (15, 16) begrenzen, deren eine (15) eine elastische Rückstelleinrichtung (20) aufnimmt, die auf den Kolben (14) einwirkt, der durch eine Gleitverschiebung der Stange (8) in einer Lagerung (24), die das Gehäuse (12) fest mit dem Körper (1) verbindet, entlang der Drehachse (X-X) verschiebbar geführt ist, wobei eine Kammer (16) Atmosphärendruck aufweist und die andere Kammer (15) wahlweise in Verbindung (17, 18) mit der Atmosphäre oder einem unter Druck oder Unterdruck stehenden Gas steht, zum Verschieben des beweglichen Organs (14) und der Stange (8) gegen die elastische Rückstelleinrichtung (20) und zum Veranlassen eines Verschwenkens des Drosselelements (3).

10. Dosierungsvorrichtung nach Anspruch 9, dadurch gekennzeichnet, daß der Körper (1), die Lagerung (24) und zumindest ein Abschnitt (12b) des Betätigungselement-Gehäuses (12) einstückig aus einem formbaren Kunststoffmaterial ausgebildet sind, und/oder dadurch, daß das Drosselelement (3) einstückig aus einem formbaren Kunststoffmaterial ausgebildet ist, sowie daß die Stange (8) mit zumindest einem Abschnitt (14a) des Kolbens (14) einstückig ausgebildet ist.
